Europäisches Patentamt

European Patent Office

Office européen des brevets

(19)

(11) Veröffentlichungsnummer: **0 007 628**
**B1**

(12) **EUROPÄISCHE PATENTSCHRIFT**

(45) Veröffentlichungstag der Patentschrift:
29.04.81

(21) Anmeldenummer: **79102651.1**

(22) Anmeldetag: **25.07.79**

(51) Int. Cl.³: **H 04 B 3/44,** H 04 B 3/46,
G 01 R 31/08

(54) Schaltungsanordnung zur Fernspeisung von Zwischenstellen einer Einrichtung der Nachrichtenübertragungstechnik.

(30) Priorität: **27.07.78 DE 2833017**

(43) Veröffentlichungstag der Anmeldung:
**06.02.80 Patentblatt 80/3**

(45) Bekanntmachung des Hinweises auf die Patenterteilung:
**29.04.81 Patentblatt 81/17**

(84) Benannte Vertragsstaaten:
**BE DE FR GB IT NL**

(56) Entgegenhaltungen:
**DE-A-2 260 335**
**DE-B-1 462 219**
**DE-B1-2 620 348**
**DE-B2-1 902 090**
**DE-B2 2 531 096**
**DE-C-1 762 599**

(73) Patentinhaber: **SIEMENS AKTIENGESELLSCHAFT Berlin
und München, Postfach 22 02 61, D-8000 München 22 (DE)**

(72) Erfinder: **Ziegler, Alfred, Dipl.-Ing., Laimer Platz 1,
D-8000 München 21 (DE)**
Erfinder: **Knesewitsch, Jakob, Bannwaldseestrasse 69,
D-8000 München 70 (DE)**

## Schaltungsanordnung zur Fernspeisung von Zwischenstellen einer Einrichtung der Nachrichtenübertragungstechnik

Die Erfindung bezieht sich auf eine Schaltungsanordnung zur Fernspeisung von Zwischenstellen einer Einrichtung der Nachrichtenübertragungstechnik, mittels Gleichstrom-Reihenspeisung, wobei in einem Fernspeisekreis eine Reihenschaltung von zwei in Speisestellen der Nachrichtenübertragungseinrichtung vorgesehenen, über ein Speiseadernpaar miteinander verbundenen Konstantstromquellen vorgesehen ist und wobei jede der beiden Konstantstromquellen derart bemessen ist, daß sie die ganze Übertragungsstrecke versorgen kann.

Eine derartige Schaltungsanordnung ist z. B. aus »The Post Office Electrical Engineers' Journal«, Vol. 66, Part 3, Oct. 1973, Seiten 135 bis 137 bekannt.

Bei der bekannten Schaltungsanordnung sind zum Zwecke des Berührungsschutzes an beiden Enden eines Fernspeisekreises Konstantstromquellen angeschlossen. Stimmen die beiden Konstantströme exakt überein und werden die beiden Adern des Speisekreises an irgendeiner beliebigen Stelle versehentlich über den Körperwiderstand einer Person miteinander verbunden, so führt eine solche fehlerhafte Verbindung dazu, daß an der Fehlerstelle die Spannung zusammenbricht und daß sich für die beiden Speisegeräte eine entsprechende Lastaufteilung einstellt. Die Anordnung hat den Zweck sicherzustellen, daß Personen, die die Speiseadern zufällig berühren, hierdurch nicht zu Schaden kommen können. Diese Funktion hat zur Voraussetzung, daß die von den Konstantstromquellen gelieferten Ströme möglichst gut übereinstimmen, da im Berührungsfalle der Differenzstrom über die fehlerhafte Querverbindung fließt.

Aus der DE-PS 1 762 599 ist bereits eine Schaltung bekannt, die zum Schließen einer Fernspeiseschleife für reihengespeiste Unterstationen bei Streckenunterbrechungen dient. Dabei bestehen die unbesetzten Unterstationen jeweils aus je zwei parallel gespeisten Verstärkern für beide Richtungen. Zur Aufrechterhaltung der Speisung wenigstens in einem Teil des Übertragungssystems ist vorgesehen, daß in jeder Zwischenverstärkerstelle eine Relaisspule und die Verbraucherwiderstände der Verstärker in verschiedene Fernspeisestrompfade eingeschleift sind. Die Querverbindung mit dem Relaiskontakt ist über eine Weichenschaltung, bestehend aus je einer den Verbraucherwiderständen und der Relaisspule parallel geschalteten Reihenschaltung von wenigstens zwei Dioden hergestellt.

Durch diese Maßnahmen soll in Fernspeisesystemen mit gleichmäßiger Lastverteilung die für eine Fehlerortung erforderliche eindeutige Lage von Relaisspule und Querverbindung im Fernspeiseweg unabhängig davon erreicht werden, ob der Relaiszweig des Schaltzusatzes im einen oder anderen Fernspeisezweig angeordnet ist. Der Schaltzusatz ist ein Vierpol, der mit jeweils einem Klemmenpaar an den der Signalquelle zugewandten ersten und an den der Speisequelle abgewandten zweiten Teil der Fernspeiseschleife bzw. des Speiseadernpaares angeschlossen ist. Dadurch, daß die Relaisspule und damit der eine Längszweig des Vierpols von Zwischenverstärkerstelle zu Zwischenverstärkerstelle abwechselnd in den einen oder anderen Fernspeisestrompfad eingefügt ist und die Energieflußrichtung in der Fernspeiseschleife immer gleich ist, ergibt sich für den abwechselnd umgekehrt eingeschleiften Vierpol jeweils ein Wechsel der Energieflußrichtung.

Aufgabe der Erfindung ist es, eine Schaltungsanordnung der eingangs genannten Art, bei der sich weder Fehler in einer der beiden Speisestellen noch ein Kurzschluß auf dem Speiseadernpaar störend auf die Energieversorgung der Zwischenstellen auswirken, so auszubilden, daß mit möglichst einfachen Mitteln Fehler gemeldet und auch geortet werden können.

Gemäß der Erfindung wird die Schaltungsanordnung zur Lösung dieser Aufgabe derart ausgebildet, daß die beiden Konstantstromquellen auf verschiedene Stromwerte eingestellt sind und daß wenigstens an eine der beiden Konstantstromquellen, insbesondere an die auf den kleineren Stromwert eingestellte Konstantstromquelle, eine Einrichtung zur Überwachung der Ausgangsspannung angeschlossen ist. Auf diese Weise läßt sich eine Verbindung zwischen den beiden Speiseadern zumindestens in einer der beiden Speisestellen erkennen.

Durch diese Maßnahmen ergibt sich in vorteilhafter Weise eine besonders einfach realisierbare Möglichkeit zur Fehlermeldung und/oder -ortung, ohne daß hierbei zusätzliche Übertragungseinrichtungen erforderlich sind.

In weiterer Ausgestaltung der Erfindung wird die Schaltungsanordnung derart ausgebildet, daß in den Zwischenstellen jeweils ein für beide Energieflußrichtungen wirksamer Schaltzusatz vorgesehen ist, so daß eine mittels der Einrichtung zur Überwachung feststellbare Verbindung der Speiseadern auch bei Unterbrechung des Fernspeisekreises herbeigeführt wird. Es ergibt sich dabei in vorteilhafter Weise zusätzlich zu einer unterbrechungsfreien Fernspeisung auch im Falle einer Unterbrechung des Speisekreises eine Überwachung und/oder Fehlerortung hinsichtlich derartiger Unterbrechungen.

In Weiterbildung der Erfindung sind die Speiseeinrichtungen der Zwischenstellen für einen Bereich des Speisestromes ausgelegt, der die Stromwerte, auf die die beiden Fernspeisegeräte eingestellt sind, umfaßt.

Zweckmäßigerweise überwacht die Einrichtung zur Überwachung der Ausgangsspannung für den Fall, daß sie bei der auf den kleineren Stromwert eingestellten Konstantstromquelle wirksam ist, die Höhe der Gleichspannung.

Weiterhin kann die Einrichtung zur Überwachung der Ausgangsspannung für den Fall, daß sie bei der auf den größeren Stromwert eingestellte Konstantstromquelle wirksam ist, Änderungen der Gleichspannung überwachen.

Die Erfindung wird anhand der in den Figuren dargestellten Ausführungsbeispiele näher erläutert. Es zeigt

Fig. 1 eine Schaltungsanordnung zur unterbrechungslosen Fernspeisung von Zwischenstellen einer Nachrichtenübertragungseinrichtung,

Fig. 2 den Potentialverlauf bei der in Fig. 1 gezeigten Schaltungsanordnung bei ungestörtem Betrieb bzw. Ausfall einer Speisestelle,

Fig. 3 den Potentialverlauf der in Fig. 1 gezeigten Schaltungsanordnung bei Kurzschluß oder Unterbrechung der Fernspeisestrecke,

Fig. 4 eine Schaltungsanordnung zur unterbrechungslosen Fernspeisung von Zwischenstellen mit Fehlerüberwachung und Fehlerortung,

Fig. 5 für die in Fig. 4 gezeigte Schaltungsanordnung den Potentialverlauf auf der Fernspeisestrecke bei ungestörtem Betrieb und bei einem Streckenfehler und

Fig. 6 und 7 Schaltzusätze, d. h. Schaltungen zum Schließen der Fernspeiseschleife bei Streckenunterbrechung, und zwar Fig. 6 mit einem empfindlichen Relais und Fig. 7 mit einem weniger empfindlichen Relais.

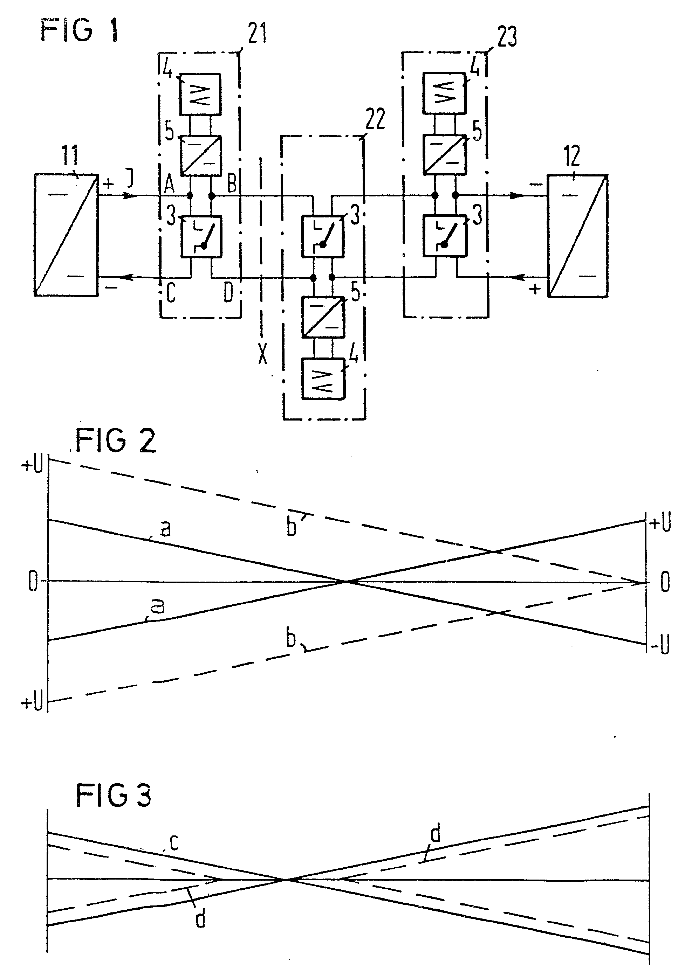

Fig. 1 zeigt eine Anordnung zur unterbrechungsfreien Fernspeisung von Zwischenstellen einer Einrichtung zur Nachrichtenübertragung, die insbesondere Zwischenregeneratoren einer Lichtwellenleiter-Strecke sind.

Dabei läuft der Fernspeisekreis über Speiseadern, die gegebenenfalls zusätzlich zu den Lichtwellenleitern vorgesehen sind. Bei einer Nachrichtenübertragungsstrecke mit Koaxialleitungen, z. B. TF-Übertragungsstrecken, kann der Fernspeisekreis insbesondere über die Innenleiter der Kabel verlaufen.

Die Zwischenstellen 21 . . . 23 der Nachrichtenübertragungseinrichtung werden mittels Reihenspeisung mit konstantem Gleichstrom I gespeist. In jeder Zwischenstelle 21 . . . 23, die eine Regenerator- oder Verstärkerstelle sein kann, ist ein Umrichter 5 zur Lieferung der Betriebsspannung für die Verbraucher vorgesehen, dessen Eingang vom Fernspeise-Gleichstrom I durchflossen ist. Der Umrichter 5 versorgt jeweils einen Leitungsverstärker 4, der je Übertragungsrichtung der Nachrichtenübertragungsstrecke einen Einzelverstärker enthält. Die beiden Einzelverstärker werden, was in der Figur nicht näher dargestellt ist, insbesondere parallel gespeist, so daß sich für die Schaltungsanordnung zur Fernspeisung eine Parallel-Reihenspeisung ergibt.

Die Umrichter 5 werden im Fernspeisekreis in Reihenschaltung betrieben. Die Eingänge der Umrichter 5 sind von Zwischenstelle zu Zwischenstelle alternierend in den einen und den anderen Fernspeise-Strompfad geschaltet, um eine gleichmäßige Lastverteilung zu erzielen. Sie können jedoch gegebenenfalls auch in ein und dieselbe Fernspeiseader bzw. ein und demselben Fernspeise-Strompfad eingefügt sein.

Das Fernspeise-Aderpaar ist an beiden Enden jeweils an ein Fernspeisegerät 11 bzw. 12 angeschlossen, so daß sich eine beidseitige Speisung mit gleichzeitig vorhandener Geräteredundanz ergibt. Dabei ist im Fernspeisekreis eine Reihenschaltung der beiden Fernspeisegeräte 11 und 12 wirksam. Jedes dieser beiden Fernspeisegeräte ist in der Lage, die ganze Fernspeisestrecke nach dem Prinzip der sogenannten »heißen Reserve« zu versorgen.

Ohne besondere Maßnahmen stellt sich im ungestörten Betrieb die Lastaufteilung beliebig, nämlich entsprechend den unvermeidbaren Toleranzen der Fernspeisegeräte zufällig ein; dies ist für die Konstantstromlieferung ohne Bedeutung.

Fig. 2 zeigt den Potentialverlauf auf der Fernspeisestrecke. Das Geradenpaar a zeigt den Verlauf bei ungestörtem Betrieb und das Geradenpaar b für einen Ausfall des Fernspeisegerätes 12. Im Falle a ist die Lastaufteilung zwischen den beiden Fernspeisegeräten zufällig. Im Falle b liefert das Fernspeisegerät 11 die gesamte Leistung.

Bei Kurzschluß an einer Stelle X des Fernspeisekreises stellt sich der in Fig. 3, Geradenpaar c dargestellte Potentialverlauf auf der Fernspeisestrecke ein.

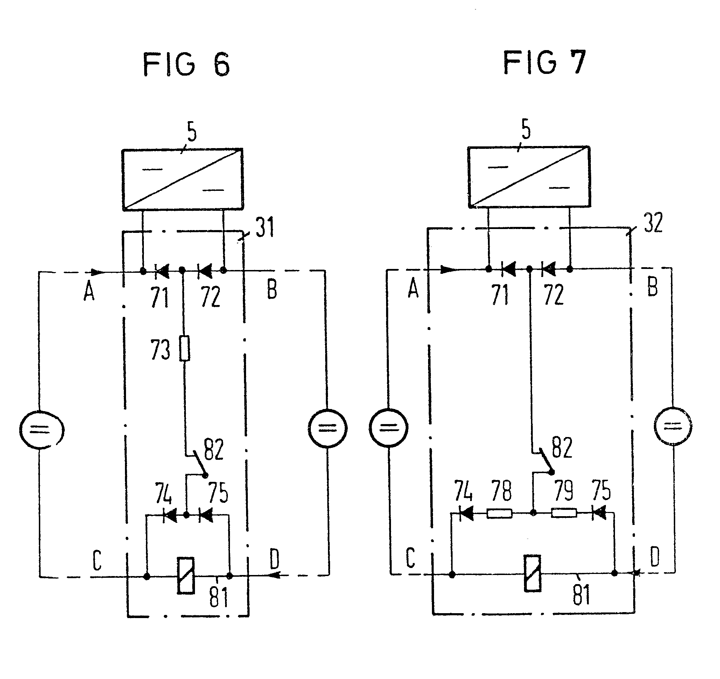

Ein unterbrechungsfreier Betrieb der Zwischenstellen auch bei einer Unterbrechung an einer Stelle X des Fernspeise-Aderpaares wird dadurch erreicht, daß in jeder Zwischenstelle ein Schaltzusatz 3 vorgesehen ist, der bei einer Unterbrechung einer oder beider Speiseadern den Fernspeisekreis vor der Unterbrechungsstelle X so schließt, daß die Umrichter 5 der Zwischenstellen weiter versorgt werden. Ein derartiger Schaltzusatz ist in den Fig. 6 und 7 näher dargestellt. Den zugehörigen Potentialverlauf auf der Fernspeisestrecke zeigt Fig. 3 mit dem Geradenpaar d für den Fall einer Unterbrechung an der Stelle X.

Die Meldung des Ausfalls eines Fernspeisegerätes 11 bzw. 12 erfolgt in der Speisestelle mittels der üblichen Alarme.

Eine Erkenntnis im Rahmen der Erfindung besteht darin, daß die in Fig. 1 gezeigte Schaltungsanordnung eine besonders vorteilhafte Möglichkeit bietet, Fehler am Speiseadernpaar an den Ort einer der beiden Speisestellen zu übermitteln, und zwar dadurch, daß man die Fernspeisung selbst zur Beobachtung der Streckenverhältnisse benützt.

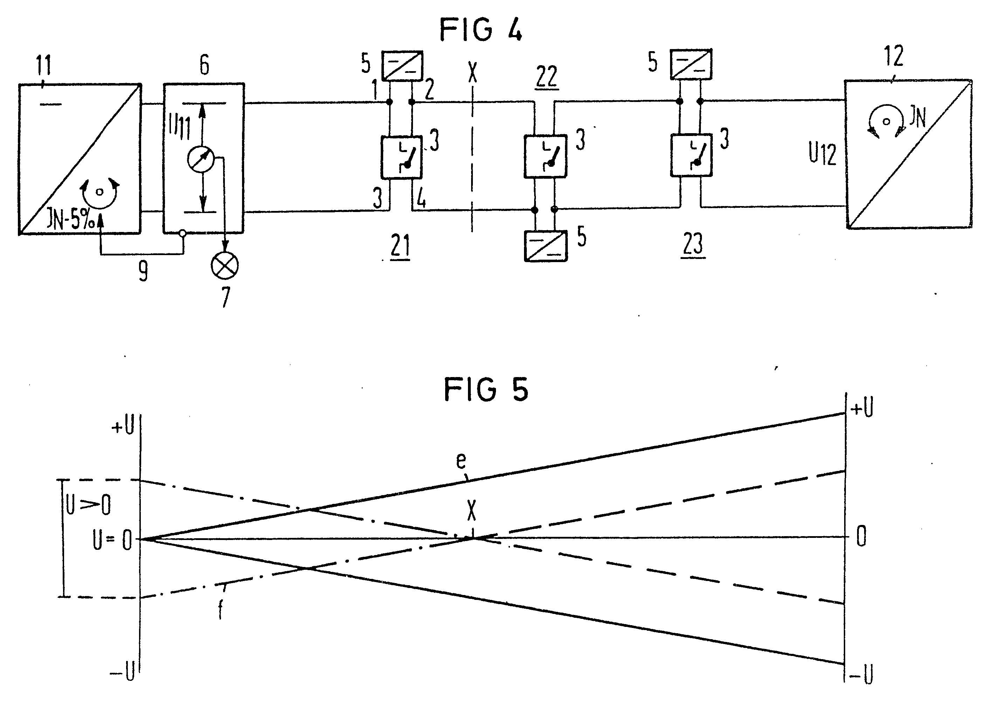

Bei einer solchen Beobachtung tritt allerdings zunächst die Schwierigkeit auf, daß bei beidseitiger Speisung eine solche Verbindungsstelle, wenn sie zufällig an der Stelle des beliebig liegenden Potential-Nullpunktes entsprechend der Stelle X in Fig. 2 auftritt, keinen Einfluß auf die Speiseverhältnisse hat und somit nicht erkennbar ist. Überlegungen im Rahmen der Erfindung haben jedoch ergeben, daß sich dieses Problem dadurch beseitigen läßt, daß eines der beiden Fernspeisegeräte insbesondere auf etwa 95% Speisestrom-Lieferung eingestellt und dessen Ausgangsspannung überwacht wird. Der Unterschied zwischen den beiden Werten des Stromes ist deutlich, z. B. um 1% größer als die Summe aus der positiven Regelabweichung für den kleineren und der negativen Regelabweichung für den größeren Wert. Eine derartige Schaltungsanordnung ist in Fig. 4 dargestellt. Die in Fig. 4 gezeigte Schaltungsanordnung ist hinsichtlich des Fernspeisekreises entsprechend Fig. 1 aufgebaut. Abweichend von Fig. 1 ist die Schaltungsanordnung so ausgebildet, daß eine Fehlerüberwachung und Fehlerortung möglich ist. Zu diesem Zweck lassen sich die Fernspeisegeräte 11 und 12 hinsichtlich des Speisestromes einstellen. Bei dem Fernspeisegerät 12 ist der Speisestrom auf den Nennwert $I_N$ eingestellt. Das andere Fernspeisegerät 11 ist dagegen auf einen Konstantstrom eingestellt, der um 5% unter dem Wert des Nennstromes $I_N$ liegt. Aufgrund des vom anderen Fernspeisegerät 12 eingeprägten höheren Konstantstromes $I_N$ stellt sich am Ausgang des Fernspeisegerätes 11 keine oder eine nur geringe negative Spannung ein.

An den Ausgang des Fernspeisegerätes 11 ist die Überwachungseinrichtung 6 angeschlossen, die den Wert der Gleichspannung mißt und für den Fall, daß die Gleichspannung größer als 0 wird, ein Signal an das Anzeigeelement 7 abgibt.

Diese Überwachungseinrichtung kann auch ein Bestandteil des Fernspeisegerätes sein. Die Speisestellen 11 und 12 sind jeweils mit einem Stellglied versehen, mit dessen Hilfe der Konstantstrom steuerbar ist. Die Überwachungseinrichtung 6 ist mit einer nicht dargestellten Steuereinrichtung versehen, die über die Verbindung 9 den Konstantstrom der Speisestelle 11 selbsttätig auf den Stromwert $I_N$—5% einstellt.

Fig. 5 zeigt für die Schaltungsanordnung nach Fig. 4 den Potentialverlauf auf der Fernspeisestrecke bei ungestörtem Betrieb oder bei einem Streckenfehler an der Stelle X. Das Geradenpaar e zeigt den Potentialverlauf bei ungestörtem Betrieb. In diesem Fall speist das Fernspeisegerät 12 die ganze Strecke mit dem Nennstrom $I_N$. Das Geradenpaar f zeigt den Potentialverlauf im Fehlerfall. Dabei speist das Fernspeisegerät 11 bis zur Stelle X mit einem Strom der Größe $I_N$—5% und das Fernspeisegerät 12 speist bis zur Stelle X mit dem Nennwert $I_N$ des Speisestromes.

Zur Fehlerortung genügt es dabei, mittels der Überwachungseinrichtung 6 eine Spannungsmessung durchzuführen, denn die Strecke vom Fehlerort X zum Fernspeisegerät 11 ist der Ausgangsspannung U11 des Fernspeisegerätes proportional. Nachdem sich die Ausgangsspannungen $U_{11}$, $U_{12}$ der Fernspeisegeräte zum Fehlerort etwa wie ihre Entfernungen verhalten, läßt sich auch aus der geringer gewordenen Fernspeisespannung $U_{12}$ das fehlerhafte Feld ermitteln. Im ungestörten Betrieb übernimmt das zweite Fernspeisegerät 12, das den Speisestrom $I_N$ liefert, die Versorgung der vollen Fernspeisestrecke, wobei der Potential-Nullpunkt im Fernspeisegerät 11 liegt, das auf 95% des Nenn-Fernspeisestromes eingestellt ist. Wie Fig. 5 zeigt, hat die Ausgangsspannung des Fernspeisegerätes 11 den Wert 0 V; gegebenenfalls kann sie geringfügig negativ sein.

Sobald eine Verbindung zwischen den Speiseadern auftritt, speist das Fernspeisegerät 11 bis zu dieser Stelle. Seine Ausgangsspannung ist in diesem Fall größer als 0 V. Dies ist das Kriterium zur Meldung des Streckenfehlers.

Das Fernspeisegerät 12 speist ebenfalls bis zur Verbindungsstelle, so daß die gesamte Strecke weiterhin versorgt bleibt.

Damit der Unterschied der Speiseströme bei diesem Betriebszustand für die Verstärker ohne Einfluß bleibt, sind die Umrichter 5 in der Lage, schon bei 95% des Nennspeisestromes die erforderlichen Betriebsspannungen abzugeben bzw. bei 100% Nennspeisestrom die damit verbundene geringfügige Stromerhöhung auszuregeln.

Die Fehlerortung erfolgt durch einfaches Ablesen der Spannungsanzeige am Fernspeisegerät 11. Falls eine Überwachung am Orte des Fernspeisegerätes 12 gewünscht wird, werden zweckmäßigerweise Änderungen der Ausgangsspannung überwacht und entsprechende Änderungsmeldungen gespeichert.

Um sowohl bei Kurzschluß als auch bei Unterbrechung auf ein Verstärkerfeld genau orten zu können, werden die Schaltzusätze, die im Unterbrechungsfall die Adern verbinden, so ausgebildet und bemessen, daß sie nur einen Spannungsabfall an der Verbindungsstelle aufweisen, der deutlich geringer ist als der Spannungsabfall eines Verstärkerfeldes.

In jeder Zwischenstelle ist ein Schaltzusatz 3 vorgesehen, der bei einer Unterbrechung der Fernspeiseschleife die beiden Speiseadern in der Weise verbindet, daß der zugehörige Zwischenverstärker über die nicht unterbrochene Richtung weiter versorgt und die unterbrochene Richtung dabei überwacht wird. Nach Beseitigung der Unterbrechung wird die Adernverbindung am Schaltzusatz selbsttätig wieder aufgehoben.

Fig. 6 zeigt den Aufbau dieses Schaltzusatzes bei Verwendung eines empfindlichen Relais 81.

Der Schaltzusatz 31 wird auf der einen Seite mit den Anschlüssen A und C, auf der anderen Seite mit den Anschlüssen B und D in den Fernspeisekreis eingeschaltet. Die Anschlüsse A und B, an die der Umrichter 5 angeschlossen ist, sind über eine Serienschaltung aus den Dioden 71 und 72 verbunden. Zwischen den Anschlüssen C und D liegt das Relais 81, das durch die Serienschaltung der Dioden 74 und 75 überbrückt ist. Zwischen den Verbindungspunkten der beiden Dioden 71, 72 bzw. 74, 75 liegt die Reihenschaltung des Widerstandes 73 mit dem Ruhekontakt 82 des Relais 81.

Tritt die Streckenunterbrechung in Richtung der Anschlüsse B, D auf, so wird der Umrichter 5 aus der Richtung der Anschlüsse A-C weiterbetrieben. Der Speisestrom fließt dann vom Anschluß A kommend über den Eingang des Umrichters 5 (Diode 71 sperrt), Diode 72 und Querwiderstand 73 zum geschlossenen Relaiskontakt 82, und von dort über die Diode 74 und Anschluß C wieder zurück. Das Relais 81 überwacht die fehlerhafte Richtung der Anschlüsse B-D.

Tritt die Streckenunterbrechung in Richtung der Anschlüsse A-C auf, so werden die Umrichter 5 aus der Richtung der Anschlüsse B-D weiter betrieben. Der Stromfluß verläuft dann vom Anschluß D über die Diode 75, den Kontakt 82, den Widerstand 73, die Diode 71, den Umrichter 5 zum Anschluß B. Das Relais 81 überwacht nun die fehlerhafte Richtung der Anschlüsse A-B.

Fig. 7 zeigt eine Abwandlung des in Fig. 6 dargestellten Schaltzusatzes bei Einsatz eines weniger empfindlichen Relais 81'. Der Schaltzusatz nach Fig. 7 unterscheidet sich von dem nach Fig. 6 außerdem dadurch, daß anstelle des durch eine direkte Verbindung ersetzten Widerstandes 73 in Serie zu den Dioden 74 und 75 jeweils ein Widerstand 78 bzw. 79 angeordnet ist.

Die Diodenbrücke 71, 72, 74, 75 des in Fig. 5 bzw. Fig. 6 gezeigten Schaltzusatzes ermöglicht in vorteilhafter Weise die gleiche Arbeitsweise unabhängig von der Speiserichtung mit nur einem Relais 81 bzw. 81'.

**Patentansprüche**

1. Schaltungsanordnung zur Fernspeisung von Zwischenstellen einer Einrichtung der Nachrichtenübertragungstechnik mittels Gleichstrom-Reihenspeisung, wobei in einem Fernspeisekreis eine Reihenschaltung von zwei in Speisestellen der Nachrichtenübertragungseinrichtung vorgesehenen, über ein Speiseadernpaar miteinander verbundenen Konstantstromquellen vorgesehen ist und wobei jede der beiden Konstantstromquellen derart bemessen ist, daß sie die ganze Übertragungsstrecke versorgen kann, dadurch gekennzeichnet, daß die beiden Konstantstromquellen (11, 12) auf verschiedene Stromwerte eingestellt sind und daß wenigstens an eine der beiden Konstantstromquellen, insbesondere an die auf den kleineren Stromwert eingestellte Konstantstromquelle (11), eine Einrichtung (6) zur Überwachung der Ausgangsspannung ($U_{F1}$) angeschlossen ist.

2. Schaltungsanordnung nach Anspruch 1, dadurch gekennzeichnet, daß in den Zwischenstellen (21 ... 23) jeweils ein für beide Energieflußrichtungen wirksamer Schaltzustand (3) vorgesehen ist.

3. Schaltungsanordnung nach Anspruch 1 oder 2, dadurch gekennzeichnet, daß die Speiseeinrichtungen (5) der Zwischenstellen (21 .... 23) für einen Bereich des Speisestromes (I) ausgelegt sind, der die Stromwerte, auf die die beiden Fernspeisegeräte (11, 12) eingestellt sind, umfaßt.

4. Schaltungsanordnung nach einem der Ansprüche 1 bis 3, dadurch gekennzeichnet, daß die Einrichtung zur Überwachung der Ausgangsspannung für den Fall, daß sie an die auf den kleineren Stromwert eingestellte Konstantstromquelle (11) angeschlossen ist, die Größe der Gleichspannung überwacht.

5. Schaltungsanordnung nach einem der Ansprüche 1 bis 3, dadurch gekennzeichnet, daß die Einrichtung (6) zur Überwachung der Ausgangsspannung für den Fall, daß sie an die auf den größeren Stromwert eingestellte Konstantstromquelle (12) angeschlossen ist, Änderungen der Gleichspannung überwacht.

6. Schaltungsanordnung nach einem der vorhergehenden Ansprüche, dadurch gekennzeichnet, daß die Überwachungseinrichtung (6) mit einer Steuereinrichtung versehen ist, die den Konstantstrom selbsttätig auf den kleineren Stromwert einstellt.

7. Schaltungsanordnung nach Anspruch 6, dadurch gekennzeichnet, daß die Überwachungseinrichtung (6) einen Bestandteil der Konstantstromquelle bildet.

8. Schaltungsanordnung nach Anspruch 6, dadurch gekennzeichnet, daß die Inbetriebnahme der Überwachungseinrichtung und die Einstellung des Stromwertes der Konstantstromquelle über ein Stellglied in der Speisestelle beim Einsetzen der Geräte selbsttätig erfolgt.

**Claims**

1. Circuit arrangement for the remote feed of intermediate stations of a communications transmission system employing d. c. series feed, wherein a remote feed circuit contains a series arrangement of two constant current sources which are arranged in feed stations in the communications transmission system and are connected to one another via a pair of feed wires, and wherein each of the two constant current sources is contrived to be such that it is capable of supplying the entire transmission link, characterised in that the two constant current sources (11, 12) are set at different current values, and that a device (6) which serves to monitor the output voltage ($U_{F1}$) is connected to at least one of the two constant current sources, especially the constant current source (11) which is set at the lower current value.

2. Circuit arrangement as claimed in Claim 1, characterised in that the intermediate stations (21 .... 23) each contain a supplementary switching device (3) which is operative in respect of both energy flow directions.

3. Circuit arrangement as claimed in Claim 1 or 2, characterised in that the feed devices (5) in the intermediate stations (21 ... 23) are designed for a range of the feed current (I) which includes the current values at which the two remote feed devices (11, 12) have been set.

4. Circuit arrangement as claimed in one of the Claims 1 to 3, characterised in that in the event that it is connected to the constant current source (11) set at the lower current value, the device for monitoring the output voltage monitors the value of the d. c. voltage.

5. Circuit arrangement as claimed in one of the Claims 1 to 3, characterised in that in the event that it is connected to the constant current source (12) set at the higher current value, the device (6) for monitoring the output voltage monitors changes in the d. c. voltage.

6. Circuit arrangement as claimed in one of the preceding Claims, characterised in that the monitoring device (6) is provided with a control device which automatically sets the constant current at the lower current value.

7. Circuit arrangement as claimed in Claim 6, characterised in that the monitoring device (6) forms a part of the constant current source.

8. Circuit arrangement as claimed in Claim 6, characterised in that activation of the monitoring device and the setting of the stray (sic) value of the constant current source are automatically effected via a control element in the feed station when the devices are switched on.

**Revendications**

1. Montage pour alimenter à distance des postes intermédiaires d'une installation de la technique de transmission d'informations au moyen d'une alimentation série à courant continu, et dans lequel il est prévu dans un circuit d'alimentation à distance, un montage série formé de deux sources de courant constant, prévues dans des postes d'alimentation de l'installation de transmission d'informations et reliées entre elles par l'intermédiaire d'un couple de conducteurs d'alimentation et dont chacune est dimensionée de manière à pouvoir alimenter l'ensemble de la voie transmission, caractérisé par le fait que les deux sources de courant constant (11, 12) sont réglées sur différentes valeurs de courant et qu'un dispositif (6) permettant de contrôler la tension de sortie (U$_{F1}$) est raccordé à au moins l'une des deux sources de courant constant, notamment à la source de courant constant (11) réglée sur l'intensité la plus faible du courant.

2. Montage suivant la revendication 1, caractérisé par le fait qu'il est prévu un dispositif supplémentaire de commutation (3), actif pour les deux directions de flux d'énergie, dans les postes intermédiaires (21 . . . 23).

3. Montage suivant la revendication 1 ou 2, caractérisé par le fait que les dispositifs d'alimentation (5) des postes intermédiaires (21 . . . 23) sont conçus pour une plage du courant d'alimentation (I) qui englobe les intensités de courant sur lesquelles sont réglés les deux appareils d'alimentation à distance (11, 12).

4. Montage suivant l'une des revendications 1 à 3, caractérisé par le fait que le dispositif permettant de contrôler la tension de sortie contrôle la grandeur de la tension continue dans le cas où il raccordé à la source de courant constant (11) réglée sur la plus petite intensité de courant.

5. Montage suivant l'unde des revendications 1 à 3, caractérisé par le fait que le dispositif (6) permettant de contrôler la tension de sortie contrôle des variations de la tension continue dans le cas où il est raccordé à la source de courant constant (12) réglée sur l'intensité maximum du courant.

6. Montage suivant l'une des revendications précédentes, caractérisé par le fait que le dispositif de contrôle (6) est muni d'un dispositif de commande qui règle automatiquement le courant constant sur la plus faible intensité.

7. Montage suivant la revendication 6, caractérisé par le fait que le dispositif de contrôle (6) est une partie constitutive de la source de courant constant.

8. Montage suivant la revendication 6, caractérisé par le fait que la mise en service du dispositif de contrôle et le réglage de la valeur de dispersion de la source de corant constant sont réalisés automatiquement par l'intérmédiaire d'un organe de réglage situé dans le poste d'alimentation, lors de l'utilisation des appareils.

# FIG 1

# FIG 2

# FIG 3

# FIG 4

# FIG 5

# FIG 6

# FIG 7